# FASCICULE DE BREVET EUROPEEN

(11) **EP 1 220 256 B1**
(45) Date de publication et mention de la délivrance du brevet: **21.02.2007**
(21) Numéro de dépôt: 01403366.6
(22) Date de dépôt: 26.12.2001
(51) Int. Cl.: H01H 61/02, H01H 1/00

(54) **Micro-dispositif à actionneur thermique**
Mikrovorrichtung mit thermischem Betätiger
Micro device with thermal actuator

(30) Priorité: 27.12.2000 FR 0017113
(43) Date de publication de la demande: 03.07.2002
(73) Titulaire: COMMISSARIAT A L'ENERGIE ATOMIQUE, 75015 Paris (FR)
(72) Inventeur: Charvet, Pierre-Louis, 38950 Saint Martin le Vinoux (FR); Dufour, Michel, 38000 Grenoble (FR)
(74) Mandataire: Poulin, Gérard

(56) Documents cités:
- EP-A- 1 098 121
- DE-A- 3 809 597
- FR-A- 2 766 962
- FR-A- 2 772 512
- US-A- 5 467 068

## Description

### Domaine technique

La présente invention concerne un micro-dispositif à élément déformable sous l'effet d'un actionneur thermique. Ce micro-dispositif peut constituer un micro-commutateur particulièrement adapté à la commutation de signaux radiofréquence.

### Etat de la technique antérieure

Les micro-commutateurs sont des micro-dispositifs utilisés de plus en plus dans les dispositifs électroniques modernes dont l'une des caractéristiques importantes est leur taille de plus en plus réduite. C'est le cas notamment des téléphones portables. La conception d'un micro-commutateur pour ce type de matériel se heurte au délicat problème de la puissance disponible embarquée pour pouvoir actionner les micro-commutateurs. La commande des micro-commutateurs actuels doit pouvoir se faire pour des tensions faibles (3V par exemple) et en des temps très courts.

Le document "Micromechanical relay with electrostatic actuation and metallic contacts" de M.-A. GRETILLAT et al., Transducers'99, June 7-10, 1999, Sendai, Japon, divulgue un micro-commutateur à commande électrostatique nécessitant une commande de l'ordre de 20 V.

Le document "Bulk micromachined relay with lateral contact" de zhihong LI et al., paru dans J. Micromech. Microeng. 10 (2000), pages 329-333, divulgue un relais à commande électrostatique mettant en oeuvre des surfaces en regard importantes. Il en résulte un amortissement pneumatique. Le système est amorti et les temps de commutation augmentent. Par ailleurs, la réalisation technique du contact de la ligne active est très difficile et la multitude d'électrodes impliquées favorise des perturbations dans la commande sur le signal radiofréquence véhiculé par la ligne active.

Le document FR-A-2 772 512 divulgue un microsystème, utilisable notamment pour réaliser des micro-rupteurs ou des micro-valves, constitué sur un substrat et servant à obtenir un basculement entre un premier état de fonctionnement et un deuxième état de fonctionnement grâce à un actionneur thermique à effet bilame. L'actionneur comprend un élément déformable rattaché, par des extrémités opposées, au substrat de façon à présenter naturellement une déflexion sans contrainte par rapport à une surface du substrat qui lui est opposée, cette déflexion naturelle déterminant le premier état de fonctionnement, le deuxième état de fonctionnement étant provoqué par l'actionneur thermique qui induit, sous l'effet d'une variation de température, une déformation de l'élément déformable tendant à diminuer sa déflexion et le soumettant à une contrainte de compression qui entraîne son basculement par effet de flambage dans une direction opposée à sa déflexion naturelle. Ce dispositif nécessite un échange thermique relativement important pour sa commande. Lorsque la résistance de commande est chauffée, la poutre constituant l'élément déformable dissipe une partie importante de l'apport de chaleur (par rayonnement, conduction). Il faut tenir compte de cette perte d'énergie thermique pour l'énergie à apporter à la commande du bilame. Par ailleurs, le temps de basculement de la structure est relativement long du fait du temps nécessaire à la conduction thermique et aussi du fait des pertes par rayonnement avec l'environnement qu'il faut compenser durant le chauffage.

### Exposé de l'invention

Pour remédier aux inconvénients cités ci-dessus, il est proposé un micro-dispositif comprenant des moyens conducteurs situés à un premier niveau et des moyens conducteurs situés à un deuxième niveau, les moyens conducteurs du premier niveau étant portés par un élément déformable pouvant basculer au moyen d'un actionneur à effet bilame, le basculement ayant pour effet de modifier l'écartement entre les moyens conducteurs du premier niveau et les moyens conducteurs du deuxième niveau, caractérisé en ce que l'actionneur à effet bilame est constitué par des moyens résistifs en contact intime et localisé avec l'élément déformable, les moyens résistifs étant aptes, lorsqu'ils sont traversés par un courant électrique de commande, à se dilater suffisamment sous l'effet de la chaleur produite par le passage du courant électrique de commande pour provoquer, par effet bilame, le basculement de l'élément déformable avant que la chaleur produite dans les moyens résistifs ait pu se propager dans l'élément déformable.

De préférence, l'élément déformable est une poutre ou une membrane.

Des moyens de maintien électrostatique peuvent être prévus pour maintenir l'élément déformable dans la position qu'il présente après son basculement, lorsque le courant électrique de commande est annulé. Les moyens de maintien électrostatique peuvent comprendre au moins une paire d'électrodes en vis-à-vis, l'une de ces électrodes étant solidaire de l'élément déformable, l'autre étant située de façon que, lorsque l'élément déformable a basculé, l'écart entre les électrodes en vis-à-vis soit minimal.

Selon une variante de réalisation, les moyens de maintien électrostatique comprennent au moins une paire d'électrodes en vis-à-vis, l'une de ces électrodes étant solidaire de l'élément déformable, l'autre étant situé de façon que, lorsque l'élément déformable a basculé, les électrodes soient en contact l'une avec l'autre mais séparées par des moyens d'isolation électrique.

Les moyens résistifs peuvent comprendre au moins une couche déposée sous la forme d'une onde. Ceci permet d'obtenir une meilleure efficacité pour l'actionneur.

De préférence, les moyens résistifs sont en un matériau choisi parmi l'aluminium, le manganèse, le zinc, l'or, le platine, le nickel et l'inconel 600.

Si le micro-dispositif est réalisé par les techniques de la micro-technologie, l'élément déformable peut provenir d'une couche déposée sur un substrat.

Selon un premier mode de mise en oeuvre, les moyens conducteurs situés au deuxième niveau comprennent un premier contact de ligne et un deuxième contact de ligne, le basculement de l'élément déformable ayant pour effet d'annuler l'écartement entre les moyens conducteurs du premier niveau et les moyens conducteurs du deuxième niveau, les moyens conducteurs du premier niveau assurant ainsi une liaison électrique entre le premier contact et le deuxième contact, le micro-dispositif constituant ainsi un micro-commutateur. Avantageusement, les moyens conducteurs portés par l'élément déformable sont constitués par un plot conducteur.

Selon un deuxième mode de mise en oeuvre, les moyens conducteurs du premier niveau et les moyens conducteurs du deuxième niveau constituent respectivement une première électrode et une deuxième électrode de condensateur, ce condensateur présentant une première valeur de capacité avant le basculement de l'élément déformable et une deuxième valeur de capacité après le basculement de l'élément déformable.

Selon une variante de réalisation, une couche isolante de constante diélectrique élevée sépare la première électrode et la deuxième électrode du condensateur. Cette couche isolante, d'épaisseur inférieure à 0,1 µm par exemple, peut être située sur l'une des deux électrodes ou sur les deux.

### Brève description des dessins

L'invention sera mieux comprise et d'autres avantages et particularités apparaîtront à la lecture de la description qui va suivre, donnée à titre d'exemple non limitatif, accompagnée des dessins annexés parmi lesquels :
- la figure 1 est une vue schématique et en perspective d'un micro-commutateur selon l'invention,
- les figures 2 et 3 sont des vues, respectivement en coupe longitudinale et transversale, du micro-commutateur représenté en perspective sur la figure 1,
- la figure 4 est une vue du micro-commutateur correspondant à la figure 2 mais dans le cas où l'actionneur thermique a été activé,
- la figure 5 est une vue de détail du micro-commutateur représenté aux figures 1 à 4 et montrant un mode de réalisation de l'actionneur thermique,
- la figure 6 est une vue de dessus d'un élément résistif préférentiel utilisable pour le micro-commutateur selon l'invention.

### Description détaillée de modes de réalisation de l'invention

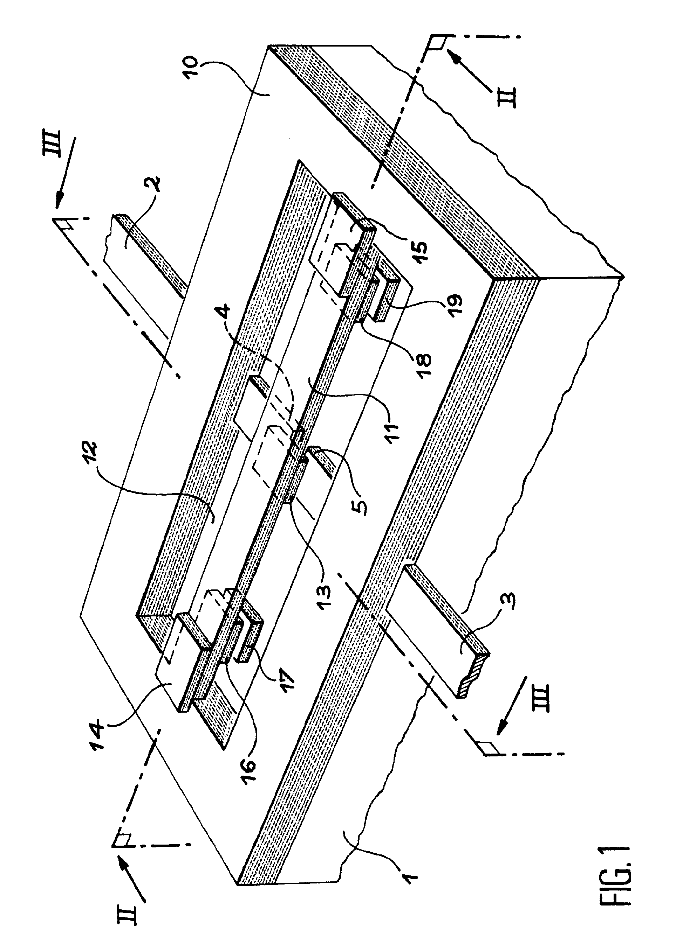

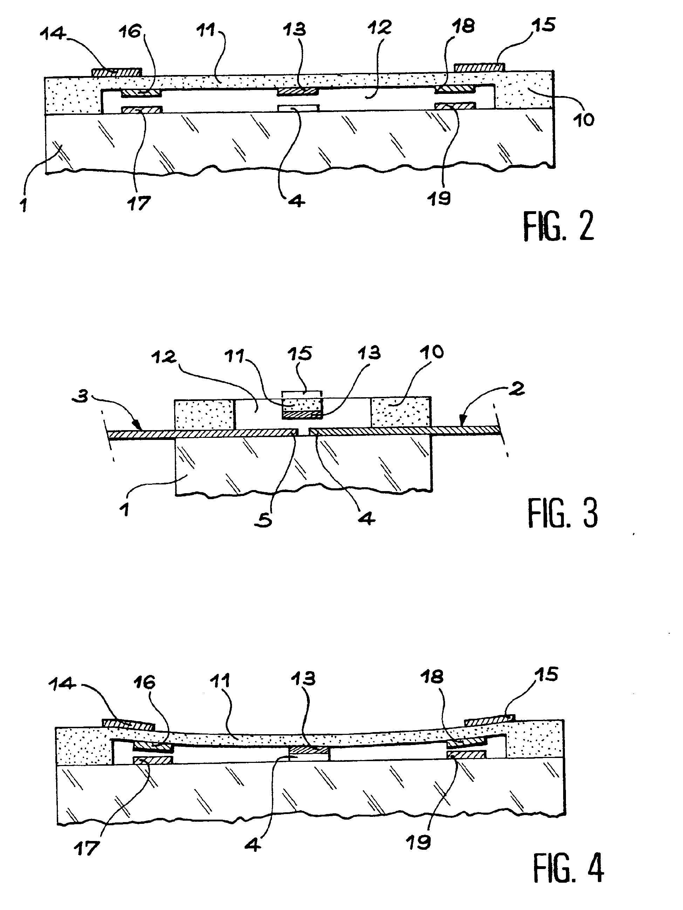

La figure 1 (vue en perspective) et les figures 2 et 3 (vues en coupe) illustrent un micro-commutateur selon la présente invention.

Ce micro-commutateur est réalisé sur un substrat 1 par exemple en silicium, en silice, en verre ou en quartz. Le substrat 1 supporte un premier tronçon de ligne 2 terminé par un contact 4 et un deuxième tronçon de ligne 3 terminé par un contact 5. Les contacts 4 et 5 sont simplement séparés par un faible intervalle.

Le substrat 1 supporte une ou plusieurs couches, en matériau isolant électrique, désignées sous la référence unique 10 et à partir de laquelle a été réalisé un élément déformable sous forme de poutre 11 (par exemple en nitrure de silicium ou en oxyde de silicium) pouvant se déformer dans une cavité 12 de la couche 10 révélant le substrat 1 et les contacts 4 et 5. La poutre 11 est pourvue, côté cavité 12, d'un plot conducteur 13 apte à assurer une liaison électrique entre les contacts 4 et 5 lorsque la poutre 11 fléchit dans la cavité 12. Ce micro-commutateur peut être réalisé par le procédé divulgué dans le document FR-A-2 772 512 cité plus haut.

La poutre (ou la membrane le cas échéant) peut être formée par un empilement de couches de coefficient de dilatation différents.

La poutre 11 supporte deux éléments résistifs 14 et 15 situés vers les extrémités de la poutre. Ces éléments résistifs peuvent être des dépôts d'un matériau conducteur par exemple de l'aluminium, du manganèse, du zinc, de l'or, du platine, du nickel ou de l'inconel 600. Ils sont reliés à des sources de courant par des lignes de connexion non représentées.

La figure 2 montre des électrodes de maintien électrostatique disposées par paires et en vis-à-vis : la paire d'électrodes 16 et 17 d'une part et la paire d'électrodes 18 et 19 d'autre part. Les électrodes 16 et 18 sont supportées par la poutre 11. Elles peuvent aussi être incluses dans la poutre. Les électrodes 17 et 19 sont disposées au fond de la cavité 12, sur le substrat 1. Des lignes de connexion non représentées permettent de relier ces électrodes à des sources de tension appropriées.

Les figures 2 et 3 montrent le micro-commutateur au repos, l'actionneur n'étant pas activé. Le plot conducteur 13 n'assure pas la liaison électrique entre les contacts 4 et 5.

Lorsque l'actionneur est activé par passage d'un courant électrique dans les éléments résistifs 14 et 15, l'apport de chaleur qui en résulte provoque, par effet bilame, le fléchissement de la poutre vers le fond de la cavité 12. Le plot conducteur 13 vient appuyer sur les contacts 4 et 5 et assure la liaison électrique entre les tronçons de ligne 2 et 3. C'est ce que montre la figure 4.

Les électrodes 16 et 17 d'une part et 18 et 19 d'autre part, qui sont alors à leur écartement minimal ou en contact mais séparées par une couche isolante de faible épaisseur, assurent par l'application de tensions appropriées le maintien électrostatique de la poutre fléchie lorsque le courant électrique a cessé de passer dans les éléments résistifs 14 et 15. Les tensions de maintien électrostatique peuvent être appliquées aux électrodes 16, 17 et 18, 19 lorsque l'actionneur thermique a déjà causé le fléchissement de la poutre. Elles peuvent aussi être appliquées avant le fléchissement de la poutre de manière à accélérer ce fléchissement.

Pour ouvrir le micro-commutateur, il suffit d'annuler les tensions de maintien électrostatique. La poutre revient alors à sa position de repos et ceci d'autant plus rapidement que les parties chauffées par les éléments résistifs ont eu le temps de se refroidir.

Pour que le fléchissement de la poutre se fasse le plus rapidement possible, de même que le retour à sa position de repos, il faut que l'actionneur thermique ait un comportement de type quasi-adiabatique. Pour cela, l'effet bilame concernant la poutre et l'élément résistif n'intervient que sur une partie de la poutre, mais ceci est suffisant pour provoquer son basculement.

Le temps de montée en température des éléments 14 et 15 doit être très court pour une application à la commutation de signaux radiofréquence, en règle générale inférieur à 10 µs. Ils doivent donc être constitués d'un matériau qui chauffe très rapidement. Il faut considérer le module d'Young et le coefficient de dilatation thermique. Parallèlement, il faut déterminer ses caractéristiques géométriques.

En pratique, on choisit un matériau qui est susceptible de convenir. L'évolution de la flèche de la poutre en fonction d'une température appliquée est examinée. Cette évolution a sensiblement la forme d'une sinusoïde. La température qui permet d'obtenir un contact dans le cas d'un commutateur (ou la capacité désirée dans le cas d'un condensateur variable) est déterminée. Après cela, on détermine les deux points d'inflexion de la sinusoïde. La longueur particulièrement intéressante à donner à l'élément résistif est celle déterminée à partir de la distance entre le point d'encastrement de la poutre et le point d'inflexion.

Le comportement mécanique de la poutre est étudié pour déterminer son épaisseur la mieux adaptée puis sa géométrie la plus favorable. La température de basculement est alors déterminée.

La commande de fléchissement consiste à chauffer uniquement les éléments résistifs sans chauffer la poutre adjacente ou l'environnement des éléments résistifs. Pour le retour à la position non fléchie, les éléments résistifs doivent en principe revenir à la température ambiante avant que le maintien électrostatique ne soit relâché.

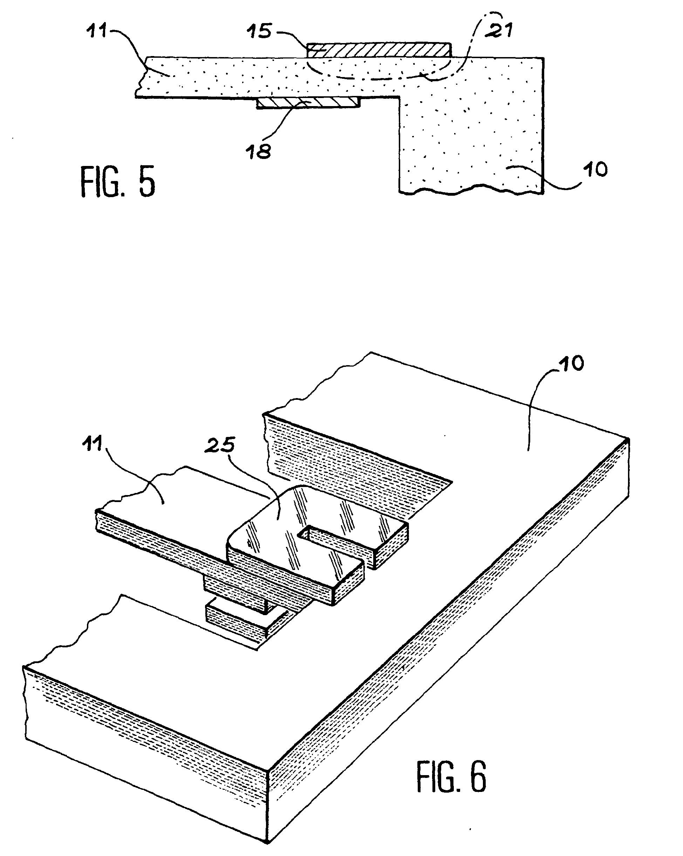

La figure 5 montre un mode de réalisation de l'actionneur thermique. C'est une vue de détail de l'une des extrémités de la poutre 11. Lorsqu'un courant électrique d'activation de l'actionneur traverse l'élément résistif 15, la chaleur qui en résulte dilate l'élément résistif et permet de faire fléchir la poutre.

La figure 6 est une vue de dessus d'un élément résistif 25 utilisable par la présente invention. Cette vue montre que l'élément résistif 25 possède la forme d'une onde. Elle a l'avantage de procurer une meilleure efficacité à l'actionneur thermique.

Le micro-commutateur selon l'invention fonctionne pour une tension disponible de 3 V. Pour utiliser au mieux cette valeur de tension, il est préférable de disposer de deux éléments résistifs alimentés en série.

## Revendications

1. Micro-dispositif comprenant des moyens conducteurs (13) situés à un premier niveau et des moyens conducteurs (4, 5) situés à un deuxième niveau, les moyens conducteurs (13) du premier niveau étant portés par un élément déformable (11) pouvant basculer au moyen d'un actionneur à effet bilame, le basculement ayant pour effet de modifier l'écartement entre les moyens conducteurs (13) du premier niveau et les moyens conducteurs (4, 5) du deuxième niveau, l'actionneur à effet bilame étant constitué par des moyens résistifs (14, 15, 25) en contact intime et localisé avec l'élément déformable (11), **caractérisé en ce que** les moyens résistifs (14, 15,25) étant aptes, lorsqu'ils sont traversés par un courant électrique de commande, à se dilater suffisamment sous l'effet de la chaleur produite par le passage du courant électrique de commande pour provoquer, par effet bilame, le basculement de l'élément déformable (11) avant que la chaleur produite dans les moyens résistifs (14, 15, 25) ait pu se propager dans l'élément déformable (11).

2. Micro-dispositif selon la revendication 1, **caractérisé en ce que** l'élément déformable est une poutre (11) ou une membrane.

3. Micro-dispositif selon l'une des revendications 1 ou 2, **caractérisé en ce que** des moyens de maintien électrostatique sont prévus pour maintenir l'élément déformable (11) dans la position qu'il présente après son basculement, lorsque le courant électrique de commande est annulé.

4. Micro-dispositif selon la revendication 3, **caractérisé en ce que** les moyens de maintien électrostatique comprennent au moins une paire d'électrodes (16, 17 ; 18, 19) en vis-à-vis, l'une de ces électrodes étant solidaire de l'élément déformable (11), l'autre étant située de façon que, lorsque l'élément déformable a basculé, l'écart entre les électrodes en vis-à-vis soit minimal.

5. Micro-dispositif selon la revendication 3, **caractérisé en ce que** les moyens de maintien électrostatique comprennent au moins une paire d'électrodes en vis-à-vis, l'une de ces électrodes étant solidaire de l'élément déformable, l'autre étant situé de façon que, lorsque l'élément déformable a basculé, les électrodes soient en contact l'une avec l'autre mais séparées par des moyens d'isolation électrique.

6. Micro-dispositif selon l'une quelconque des revendications 1 à 5, **caractérisé en ce que** les moyens résistifs (25) comprennent au moins une couche déposée sous la forme d'une onde.

7. Micro-dispositif selon l'une quelconque des revendications 1 à 6, **caractérisé en ce que** les moyens résistifs (14, 15,25) sont en un matériau choisi parmi l'aluminium, le manganèse, le zinc, l'or, le platine, le nickel et l'inconel 600.

8. Micro-dispositif selon l'une quelconque des revendications 1 à 7, **caractérisé en ce que**, le micro-dispositif étant réalisé par les techniques de la micro-technologie, l'élément déformable (11) provient d'une couche (10) déposée sur un substrat (1).

9. Micro-dispositif selon l'une quelconque des revendications 1 à 8, **caractérisé en ce que** les moyens conducteurs situés au deuxième niveau comprennent un premier contact de ligne (4) et un deuxième contact de ligne (5), le basculement de l'élément déformable ayant pour effet d'annuler l'écartement entre les moyens conducteurs (13) du premier niveau et les moyens conducteurs du deuxième niveau, les moyens conducteurs du premier niveau assurant ainsi une liaison électrique entre le premier contact (4) et le deuxième contact (5), le micro-dispositif constituant ainsi un micro-commutateur.

10. Micro-dispositif selon la revendication 9, **caractérisé en ce que** les moyens conducteurs portés par l'élément déformable sont constitués par un plot conducteur (13).

11. Micro-dispositif selon l'une quelconque des revendications 1 à 8, **caractérisé en ce que** les moyens conducteurs du premier niveau et les moyens conducteurs du deuxième niveau constituent respectivement une première électrode et une deuxième électrode de condensateur, ce condensateur présentant une première valeur de capacité avant le basculement de l'élément déformable et une deuxième valeur de capacité après le basculement de l'élément déformable.

12. Micro-dispositif selon la revendication 11, **caractérisé en ce qu**'une couche isolante de constante diélectrique élevée sépare la première électrode et la deuxième électrode du condensateur.

## Claims

1. A micro-device comprising conductors (13) located on a first level and conductors (4, 5) located on a second level, where the conductors (13) on the first level are supported by a deformable element (11) which is able to trigger by means of a bimetallic effect actuator, and where the effect of the triggering is to modify the distance between the conductors (13) on the first level and the conductors (4, 5) on the second level, the bimetallic effect actuator consisting of resistors (14, 15) in close and localized contact with the deformable element (11), **characterized in that** the resistors (14, 15, 25) are capable, when they are traversed by an electric control current, of expanding sufficiently under the effect of the heat produced by the passage of the electrical control current to cause, through a bimetallic effect, the triggering of the deformable element (11) before the heat produced in the resistors (14, 15, 25) has been able to propagate in the deformable element (11) .

2. A micro-device in claim 1, **characterized in that** the deformable element is a member (11) or membrane.

3. A micro-device as claimed in either claims 1 or 2, **characterized in that** electrostatic holders are included to hold the deformable element (11) in its position after it is switched, when the electrical control current is cancelled.

4. A micro-device in claim 3, **characterized in that** the electrostatic holders include at least one pair of electrodes (16, 17; 18, 19) facing one another, and where one of these elements forms a single piece with the deformable element (11), and the other is positioned such that, when the deformable element has triggered, the distance between the facing electrodes is minimal.

5. A micro-device in claim 3, **characterized in that** the electrostatic holders include at least one pair of facing electrodes, and where one of these electrodes forms a single piece with the deformable element, the other being positioned such that, when the deformable element has triggered the electrodes are in contact with one another, but separated by electrical insulators.

6. A micro-device as claimed in any of claims 1 to 5, **characterized in that** the resistors (25) include at least one layer deposited in the form of a wave.

7. A micro-device as claimed in any of claims 1 to 6, **characterized in that** the resistors (14, 15, 25) are made from a material chosen from aluminium, manganese, zinc, gold, platinum, nickel or inconel 600.

8. A micro-device as claimed in any of claims 1 to 7, **characterized in that**, with the micro-device being made using micro-technology techniques, the deformable element (11) originates from a layer (10) deposited on a substrate (1).

9. A micro-device as claimed in any of claims 1 to 8, **characterized in that** the conductors located on the second level include a first line contact (4) and a second line contact (5), and **in that** the effect of triggering the deformable element is to reduce to zero the distance between the conductors (13) on the first level and the conductors on the second level, with the conductors on the first level thus forming an electrical link between the first contact (4) and the second contact (5), and the micro-device thus constituting a microswitch.

10. A micro-device in claim 9, **characterized in that** the conductors supported by the deformable element are constituted by a conductive block (13).

11. A micro-device as claimed in any of claims 1 to 8, **characterized in that** the conductors on the first level and the conductors on the second level constitute respectively a first electrode and a second electrode of a condenser, and where this condenser has a first capacity value before the switching of the deformable element and a second capacity value after the switching of the deformable element.

12. A micro-device in claim 11, **characterized in that** an insulating layer of high dielectric constant separates the first electrode and the second electrode of the condenser.

## Patentansprüche

1. Mikrovorrichtung mit auf einem ersten Niveau befindlichen leitfähigen Einrichtungen (13) und auf einem zweiten Niveau befindlichen leitfähigen Einrichtungen (4, 5), wobei die leitfähigen Einrichtungen (13) des ersten Niveaus durch ein verformbares Element (11) getragen werden, das mit Hilfe eines Bimetalleffekt-Betätigers kippen kann, wobei das Kippen die Wirkung hat, den Abstand zwischen den leitfähigen Einrichtungen (13) des ersten Niveaus und den leitfähigen Einrichtungen (4, 5) des zweiten Niveaus zu verändern, und der Bimetalleffekt-Betätiger durch resistive Einrichtungen (14, 15, 25) gebildet wird, die engen und lokalisierten Kontakt mit dem verformbaren Element (11) haben,
**dadurch gekennzeichnet, dass** die resistiven Einrichtungen (14, 15, 25), wenn sie von einem elektrischen Steuerstrom durchflossen werden, fähig sind, sich unter der Wirkung der durch das Fließen des elektrischen Steuerstroms erzeugten Wärme auszudehnen und mittels Bimetalleffekt das Kippen des verformbaren Elements (11) zu bewirken, bevor sich die in den resistiven Einrichtungen (14, 15, 25) erzeugte Wärme in dem verformbaren Element (11) ausbreitet.

2. Mikrovorrichtung nach Anspruch 1, **dadurch gekennzeichnet, dass** das verformbare Element ein Balken (11) oder eine Membran ist.

3. Mikrovorrichtung nach einem der Ansprüche 1 oder 2, **dadurch gekennzeichnet, dass** elektrostatische Halteeinrichtungen vorgesehen sind, um das verformbare Element (11), wenn der elektrische Steuerstrom wieder null ist, in der Position zu halten, die es nach seinem Kippen einnimmt.

4. Mikrovorrichtung nach Anspruch 3, **dadurch gekennzeichnet, dass** die elektrostatischen Halteeinrichtungen wenigstens ein Paar sich gegenüberstehender Elektroden (16, 17; 18, 19) umfassen, wobei eine dieser Elektroden mit dem verformbaren Element (11) fest verbunden ist und die andere so angeordnet ist, dass nach dem Kippen des verformbaren Elements der Abstand zwischen den sich gegenüberstehenden Elektroden minimal ist.

5. Mikrovorrichtung nach Anspruch 3, **dadurch gekennzeichnet, dass** die elektrostatischen Halteeinrichtungen wenigstens ein Paar sich gegenüberstehender Elektroden umfassen, wobei eine dieser Elektroden mit dem verformbaren Element fest verbunden ist und die andere so angeordnet ist, dass nach dem Kippen des verformbaren Elements die Elektroden sich berühren aber durch Isolationseinrichtungen elektrisch getrennt sind.

6. Mikrovorrichtung nach einem der Ansprüche 1 bis 5, **dadurch gekennzeichnet, dass** die resistiven Einrichtungen (25) wenigstens eine in Form einer Welle bzw. wellenförmig abgeschiedene Schicht umfassen.

7. Mikrovorrichtung nach einem der Ansprüche 1 bis 6, **dadurch gekennzeichnet, dass** die resistiven Einrichtungen (14, 15, 25) aus einem unter Aluminium, Mangan, Zink, Gold, Platin, Nickel und Inconel 600 ausgewählten Material sind.

8. Mikrovorrichtung nach einem der Ansprüche 1 bis 7, **dadurch gekennzeichnet, dass** die Mikrovorrichtung durch die Techniken der Mikrotechnologie realisiert wird, wobei das verformbare Element (11) von einer auf einem Substrat (1) abgeschiedenen Schicht (10) stammt.

9. Mikrovorrichtung nach einem der Ansprüche 1 bis 8, **dadurch gekennzeichnet, dass** die leitfähigen Einrichtungen des zweiten Niveaus einen ersten Leitungskontakt (4) und einen zweiten Leitungskontakt (5) umfassen, wobei das Kippen des verformbaren Elements die Wirkung hat, den Abstand zwischen den leitfähigen Einrichtungen (13) des ersten Niveaus und den leitfähigen Einrichtungen des zweiten Niveaus null werden zu lassen und so die leitfähigen Einrichtungen des ersten Niveaus eine elektrische Verbindung zwischen dem ersten Kontakt (4) und dem zweiten Kontakt (5) herstellen, so dass die Mikrovorrichtung einen Mikroschalter bildet.

10. Mikrovorrichtung nach Anspruch 9, **dadurch gekennzeichnet, dass** die durch das verformbare Element getragenen leitfähigen Einrichtungen durch ein leitfähiges Stück (13) gebildet werden.

11. Mikrovorrichtung nach einem der Ansprüche 1 bis 8, **dadurch gekennzeichnet, dass** die leitfähigen Einrichtungen des ersten Niveaus und die leitfähigen Einrichtungen des zweiten Niveaus jeweils eine erste und eine zweite Kondensatorelektrode bilden, wobei dieser Kondensator vor dem Kippen des verformbaren Elements einen ersten Kapazitätswert und nach dem Kippen des verformbaren Elements einen zweiten Kapazitätswert aufweist.

12. Mikrovorrichtung nach Anspruch 11, **dadurch gekennzeichnet, dass** eine isolierende Schicht mit einer hohen Dielektrizitätskonstante die erste Elektrode und die zweite Elektrode des Kondensators trennt.
